# EUROPEAN PATENT SPECIFICATION

(11) **EP 0 651 934 B1**
(45) Date of publication and mention of the grant of the patent: **13.08.1997**
(21) Application number: 93913405.2
(22) Date of filing: 21.06.1993
(51) Int. Cl.: H04Q 3/66, H04M 3/36

(54) **METHOD FOR CONTROLLING TRAFFIC IN A COMMUNICATION NETWORK**
VERKEHRREGELUNGSVERFAHREN IN EINEM KOMMUNIKATIONSNETZ
PROCEDE DE REGULATION DE TRAFIC DANS UN RESEAU DE TELECOMMUNICATIONS

(30) Priority: 19.06.1992 GB 9213034
(43) Date of publication of application: 10.05.1995
(73) Proprietor: BRITISH TELECOMMUNICATIONS public limited company, London EC1A 7AJ (GB)
(72) Inventor: TESTER, Brian Charles, Lonsdale Close, SuSuffolk IP4 4HB (GB); FISK, Donald, Ipswich, Suffolk IP5 7UA (GB); SWAINE, Charles Arnold,, Shropshire SY11 3DR (GB)
(74) Representative: Dutton, Erica L. G.
(86) International application number: GB9301305
(87) International publication number: WO9400957

(56) References cited:
- EP-A- 0 258 654
- IEEE MILITARY COMMUNICATIONS CONFERENCE vol. 1, 19 October 1987, WASHINGTON (US) pages 7 - 12 L.F. GIFFORD 'Adaptive routing and traffic control in damaged circuit switched networks'
- PROCEEDINGS OF THE 13TH INTERNATIONAL TELETRAFFIC CONGRESS; 19 June 1991, COPENHAGEN (DK) pages 315 - 322 , XP303047 X.H. PHAM 'Control loop for traffic management of network under focussed overloads'
- COMMUTATION & TRANSMISSION vol. 13, no. SPEC, 1991, PARIS (FR) pages 45 - 52 , XP241934 A. PASSERON 'Network supervision and management'

## Description

This invention relates to a method of controlling a communications network which includes at least one local exchange connected by routes to one or more parent trunk exchanges each being one of a plurality of trunk exchanges interconnected by trunk routes. It is particularly concerned with the detection of local exchange failures in such networks.

Commonly a local exchange is associated with a home exchange, through which incoming calls to the local exchange are routed, and a security exchange, through which outward calls from the local exchange are routed, in normal operation. The security exchange is so called because it can also be used to route incoming calls to the local exchange if the home exchange fails. The security and home exchanges are collectively referred to as the parent exchanges of the local exchange. Exchanges other than the parent exchanges are referred to as far end trunk exchanges of the local exchanges.

Near real-time network traffic management (NTM) is an essential component of network management if optimal traffic performance in terms of call throughput is to be ensured. To give an indication of the volume of traffic which may be involved, BT's trunk network in the United Kingdom currently handles approximately six million call attempts per hour during the busy periods which is equivalent to 1,700 call attempts per second. Given such a volume of traffic it is essential that any network difficulties are detected and controlled as quickly as possible. For example, difficulties are often encountered by network traffic managers due to abnormal traffic patterns which can be caused by events such as 'phone-ins, tele-votes and public holidays (for example Christmas Day and New Year's Eve/Day). In all these cases traffic in the network varies widely from the normal level, sometimes quite spectacularly, and the network must be controlled to maintain the best overall network performance.

A publication describing management of a telecommunications network is "Network Supervision and Management", by A Passeron, published in "Commutation & Transmission" Volume 13 No. Speciale 1991 pp 45-52.

With the introduction of digital switches such as System X it is possible to monitor closely the performance of each exchange and the routes between them and to the subscribers. BT's Network Traffic Management System (NTMS) currently receives statistics on upwards of 37,000 routes from 490 exchanges in the UK every five minutes, which measurement period was chosen to be a long enough period to be able to obtain a statistically reliable measurement of the network performance whilst being short enough to allow effective real-time control of the network.

The information received by the NTMS is processed to provide CCITT recommended parameters. For instance, these include the Percentage Overflow (OFL) and All Circuits Engaged (ACE) parameters. The parameter values are then compared with thresholds to determine if any difficulties exist on the monitored network elements.

Usually the first indication of a network problem is when an 'exception' is displayed on a wall-board, or on a graphical interface at an individual manager's workstation, at a Traffic Management Centre. Exceptions are those parameter values, calculated from network element measurements, which deviate sufficiently from a predetermined threshold for that value. The exceptions are ranked in a priority order with the top 20 displayed. The threshold values are percentage-based and are set by the network traffic managers to ensure that all potential difficulties are captured. This results in some exceptions being displayed that are occasionally spurious or insignificant. The exceptions therefore need to be examined in more detail to determine if a real difficulty exists and whether it warrants any action. To help in this activity several information sources are currently used by the network traffic managers.

The NTMS provides near real-time surveillance and monitoring of the network's status and performance. It provides the network traffic managers with information to enable them take prompt action to control the flow of traffic to ensure the maximum utilization of the network in all situations. The NTMS allows network traffic managers to look at the raw statistics as well as derived generic parameters and to compare traffic patterns over the last few measurement periods to isolate any trends.

An On-Line Traffic Information System (OTIS) takes the measurement of statistics from the NTMS system and processes them to provide summarised historical data for daily and weekly traffic patterns. This system allows the network traffic managers to examine historical traffic patterns to detect any radical shifts in traffic.

A data management system provides the network traffic managers with an up-to-date copy of the routing tables at all trunk exchanges. This information is used to check the routes to which calls can be routed, which controls are in force and the routing algorithms being used.

There is also a broadcast speaker facility which connects the world-wide network management centre to all the regional centres.

Once a potential difficulty has been detected, acknowledged and analyzed, it is characterised and a decision made whether to control it using the available range of expansive and-restrictive controls to either allow alternative traffic paths through the network or to restrict or block call attempts to particular areas, respectively. The situation must then be monitored to ensure the controls are having the desired effect and that they are removed as soon as a problem has been dealt with effectively.

One class of exception associated with telecommunications networks is the failure of a local exchange.

Although local exchange failures occur relatively frequently they rarely result in a problem that requires intervention from the network traffic managers. This is because of the unit's built-in self-correcting mechanisms.

For example, if a problem occurs at a System X exchange there are a number of stages it will go through to try and recover. These are:
a) Process Rollback - this is a software routine and service is not affected. A Rollback shows on the NTMS as an exchange alarm;
b) Restart - the exchange automatically restarts and service is affected;
c) System Initialisation - the software is initialised from a backing store; and
d) Manual Reload - part or all of the system is reloaded manually.

When a unit is in trouble it will first try four or five Rollbacks and only if these are unsuccessful in curing the problem will it perform an automatic Restart. If a Restart occurs this can be detected from NTMS statistics.

Normally a Restart is sufficient to return the unit to a fully working condition. However, sometimes when the unit returns it still does not perform correctly so it needs to be monitored to ensure that it is handling calls correctly. The last two stages, c) and d), occur only rarely when a Restart fails.

In the majority of cases no action is therefore necessary. However, when it is, a control such as route gapping may be used but it is present practice only to apply route gapping if the exchange is likely to be isolated for another five minutes and the calling levels are high.

Controls available might comprise not only route gapping but also other forms of call gapping, and code blocking. Route gapping however affects all calls down a particular route. Call gapping and code blocking can be applied to be more destination specific.

When an exchange is in difficulty the first function it stops is the production of performance statistics. (In System X exchanges these are known as MSS statistics, from the Management Statistics Subsystem.) In some cases this means the statistics from the affected exchange are all zero even when it is in fact handling calls correctly. In such cases it is therefore necessary to monitor the network to determine local exchange failures other than by looking at the parameters issued by the local exchanges. To do this successfully it is necessary to monitor selected parameters which change their value in a manner distinctive of such a local exchange failure.

According to a first aspect, the present invention provides a method of controlling a communications network, which includes at least one local exchange connected by one or more routes to one or more parent trunk exchanges, each parent trunk exchange being one of a plurality of trunk exchanges interconnected by trunk routes, characterised in that the method comprises applying controls to the network to deal with a local exchange failure when the average value of the All Circuits Engaged (ACE) parameters over all traffic routes into a local exchange is greater than a first threshold and there has been a decrease in the average value of the Circuits in Service (CCTS IS) parameters over all traffic routes into the local exchange greater than a second threshold over the duration of a measurement period.

Monitoring both the ACE and CCTS IS parameters distinguishes from other failures such as route or PCM failure.

A network may be controlled according to the present invention by an apparatus to which are input the network parameters and which provides control information to the network controller when the local exchange failure condition is detected.

Alternatively, the network can be controlled automatically on detection of the local exchange failure without the intervention of the network manager.

The controls applied to the network may be route gapping applied to selected trunk exchanges, for example, as described in more detail in an application filed by the present applicants on the same day as this one. The present invention is, however, not concerned with the particular controls applied once the local exchange failure has been detected by the method of the present invention.

Various values of the first and second thresholds can be selected according to the characteristics of the particular network to which the present invention is to be applied.

The ACE parameter for traffic routes into a failed local exchange has been found to rise rapidly from the normal value of zero. It has been found that a first threshold of at least 10% is suitable.

The CCTS IS parameter of traffic routes into a local exchange falls to zero in the event of its failure. To provide flexibility in the application of the invention to different normal traffic conditions the percentage decrease of the CCITT IS parameter is monitored rather than the absolute value of the parameter. The second threshold should be large enough to avoid triggering by normal fluctuation - a second threshold of at least 20% has been found to be preferable.

The preferable measurement period is of the order of five minutes.

According to a second aspect, the present invention provides a communications network, including at least one local exchange which is connected by one or more routes to one or more parent trunk exchanges, each parent trunk exchange being one of a plurality of trunk exchanges interconnected by trunk routes, and control means for applying controls to the network, characterised in that there is included a system responsive to the average value of the All Circuits Engaged (ACE) parameters over all traffic routes into the local exchange being greater than a first threshold, and a decrease in the average value of the Circuits in Service (CCTS IS) parameters over all traffic routes into the local exchange greater than a second threshold, over the duration of a measurement period, to provide a signal indicating that the local exchange has failed.

According to a third aspect, the present invention provides a communications network including at least one local exchange which is connected by one or more routes to one or more parent trunk exchanges, each parent trunk exchange being one of a plurality of trunk exchanges interconnected by trunk routes, and control means for applying controls to the network, characterised in that there is included a system to cause controls to be applied to the network by means of the control means, said system being responsive to the average value of the All Circuits Engaged (ACE) parameters over all traffic routes into the local exchange being greater than a first threshold and a decrease in the average value of the Circuits in Service (CCTS IS) parameters over all traffic routes into the local exchange greater than a second threshold over the duration of a measurement period.

It might be noted that, for the purpose of the present specification, "traffic route" or "route" is used to describe a route in a network primarily between exchanges and does not normally include the link between a subscriber's customer premises equipment and the local exchange.

An embodiment of the invention will now be described by way of example only with reference to the accompanying drawings of which:
Figure 1 is a schematic representation of a network controllable by the method of the present invention;
Figure 2 is a schematic representation of a control system for implementing the method of the present invention; and
Figure 3 is a schematic representation of a control system for implementing the method of the present invention using direct control of a network by a computer.

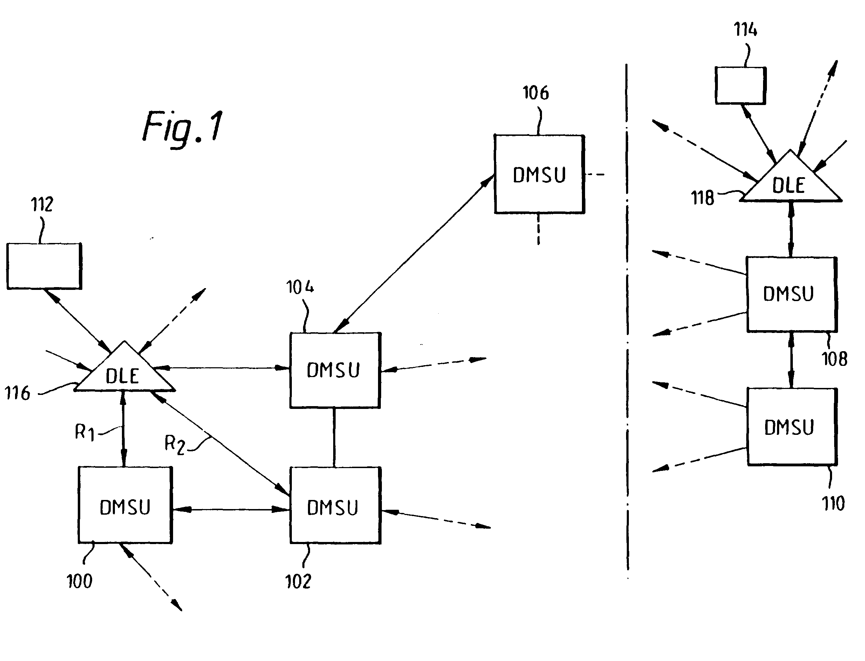

Referring to Figure 1, a telecommunications network comprises a number of digital main switch units (DMSUs) - trunk exchanges - of which only five are shown for clarity and are referenced 100, 102, 104, 106, 108 and 110. Subscribers' customer premises equipment, of which only two are shown referenced 112 and 114, are connected to the trunk exchanges 102 to 110 via respective digital local exchanges (DLE) 116 and 118.

The DLE 116 is connected to the DMSUs 100 and 102 via traffic routes R1 and R2, respectively, through which incoming calls to the subscribers attached to the DLE 116, including subscriber 112, are routed. The DMSUs 100 and 102 are commonly referred to as the home trunk exchanges for the DLE 116. The DLE 116 is also connected to the DMSU 104 through which outgoing calls from the DLE are routed. This is usually called a security exchange as incoming calls to the exchange 116 can be routed through it should one of the DMSUs 100 and 102 fail.

Similarly, the DMSU 108 is the home exchange for the digital local exchange 118.

The home and security exchanges associated with a DLE are collectively referred to as the parent exchanges of that DLE.

Those exchanges other than the parent exchanges are referred to as the far-end trunk exchanges of a given digital local exchange. For the network of Figure 1 all exchanges other than trunk exchanges 100, 102 and 104 are regarded as far end trunk exchanges for the digital local exchange 116, for example.

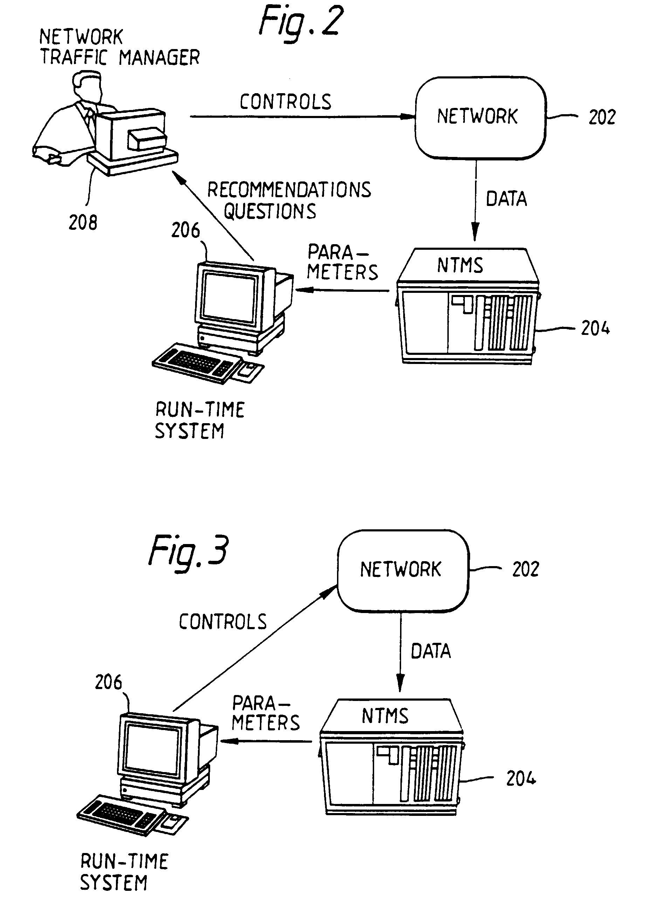

The method of controlling a telecommunications network such as that illustrated in Figure 1 according to the present invention will now be described with additional reference to Figure 2 which shows a network control system implementing the method of the present invention.

Referring to Figure 2, the network of Figure 1 is denoted by box 202. Every five minutes, which is the measurement period of the network of Figure 1, a set of statistics is generated by the digital exchanges of the network 202 which is processed by an NTMS system 204 to provide generic measurement values including those of the CCITT recommendation. These parameters are input to a run-time system 206 which applies rules to the received parameters from the NTMS 204 by means of an appropriately coded expert system. The run-time system 206 provides recommendations to aid a network traffic manager 208 on detecting a local exchange failure in the network 202 according to the method of the present invention.

The run-time system 206 employs a three phase cycle in which recommendations for the need for local exchange failure control actions are passed to the network traffic manager 208.

The run-time system 206 monitors the exchanges in the manner which will now be described with specific reference to the failure of the local exchange 116.

When the ACE parameters averaged over the traffic routes R1 and R2 into the local exchange 116 is greater than 10% and there has been a decrease in the CCTS IS parameters averaged over the traffic routes R1 and R2 into the local exchange 116 greater than 20% over the duration of the 5 minute measurement period an appropriate indication of the need for controls is issued to the network manager 208.

It is envisaged that the run-time system 206 may directly control the network to apply the method of the present invention as shown in Figure 3 but at present it is expected that it will be preferable for a network traffic manager 208 to implement the method of the present invention to allow overriding of the recommendations at his or her discretion.

The method of the present invention has been simulated on a computer representation of BT's UK telecommunications network in which the run-time system 206 comprises a PROLOG-based expert system coded with the rules necessary to provide the recommendations described above in response to the appropriate CCITT parameters from the NTMS 204.

The particular system employed was a QUINTUS PROLOG expert system run on a Sun Sparc station. Parameters generated during real network activity were recorded for the entire GB network for four, 5-minute measurement periods and stored as a data file on the computer.

A C-language program provided an interface between the raw parameters in the computer file and the expert system in that as the expert system required information about the network, the C-language program calculated the data from the raw parameters.

The conditions necessary to implement the method of the present invention were submitted to the expert system, along with other queries about the network performance every five minutes, and where appropriate, the expert system responded to generate the information required for presentation to the network manager.

The particular thresholds adopted in order to determine when a local exchange failure has occurred can be set according to the particular network 202 to which the method is to be applied. The present invention is not restricted to any particular value of threshold adopted in the above described specific embodiment.

Although embodiments of the present invention find particular application in the complex telecommunications networks of the PSTNs (Public Switched Telecommunications Networks), they should not be considered to be limited necessarily to networks carrying voice transmissions.

## Claims

1. A method of controlling a communications network, which includes at least one local exchange connected by one or more routes to one or more parent trunk exchanges, each parent trunk exchange being one of a plurality of trunk exchanges interconnected by trunk routes, characterised in that the method comprises applying controls to the network to deal with a local exchange failure when the average value of the All Circuits Engaged (ACE) parameters over all traffic routes into a local exchange is greater than a first threshold and there has been a decrease in the average value of the Circuits in Service (CCTS IS) parameters over all traffic routes into the local exchange greater than a second threshold over the duration of a measurement period.

2. A method as claimed in claim 1 in which the first threshold is at least 10%.

3. A method as claimed in any preceding claim in which the second threshold is at least 20%.

4. A method as claimed in any preceding claim in which the measurement period is approximately five minutes.

5. A communications network including at least one local exchange which is connected by one or more routes to one or more parent trunk exchanges, each parent trunk exchange being one of a plurality of trunk exchanges interconnected by trunk routes, and control means for applying controls to the network, characterised in that there is included a system responsive to the average value of the All Circuits Engaged (ACE) parameters over all traffic routes into the local exchange being greater than a first threshold, and a decrease in the average value of the Circuits in Service (CCTS IS) parameters over all traffic routes into the local exchange greater than a second threshold, over the duration of a measurement period, to provide a signal indicating that the local exchange has failed.

6. A communications network including at least one local exchange which is connected by one or more routes to one or more parent trunk exchanges, each parent trunk exchange being one of a plurality of trunk exchanges interconnected by trunk routes, and control means for applying controls to the network, characterised in that there is included a system to cause controls to be applied to the network by means of the control means, said system being responsive to the average value of the All Circuits Engaged (ACE) parameters over all traffic routes into the local exchange being greater than a first threshold and a decrease in the average value of the Circuits in Service (CCTS IS) parameters over all traffic routes into the local exchange greater than a second threshold over the duration of a measurement period.

## Patentansprüche

1. Verfahren zum Kontrollieren eines Kommunikationsnetzes, das wenigstens eine Teilnehmervermittlungsstelle enthält, die über einen oder mehr Wege mit einer oder mehr Mutterfernvermittlungsstellen verbunden ist, wobei jede Mutterfernvermittlungsstelle eine von mehreren Fernvermittlungsstellen ist, die durch Fernmeldewege miteinander verbunden sind, dadurch gekennzeichnet, daß das Verfahren das Ausüben von Kontrollen auf das Netz umfaßt, um einen Fehler in einer Teilnehmervermittlungsstelle zu behandeln, wenn während der Dauer einer Meßperiode der Durchschnittswert der Alle-Schaltungen-belegt-Parameter (ACE-Parameter) über sämtliche Verkehrswege zu einer Teilnehmervermittlungsstelle größer als ein erster Schwellenwert ist und wenn eine Abnahme des Durchschnittswerts der Schaltungen-in-Dienst-Parameter (CCTS IS-Parameter) über sämtliche Verkehrswege zu der Teilnehmervermittlungsstelle, die größer als ein zweiter Schwellenwert ist, aufgetreten ist.

2. Verfahren nach Anspruch 1, in dem der erste Schwellenwert wenigstens 10 % beträgt.

3. Verfahren nach irgendeinem vorangehenden Anspruch, in dem der zweite Schwellenwert wenigstens 20 % beträgt.

4. Verfahren nach irgendeinem vorangehenden Anspruch, in dem die Meßperiode ungefähr fünf Minuten beträgt.

5. Kommunikationsnetz mit wenigstens einer Teilnehmervermittlungsstelle, die über einen oder mehr Wege mit einer oder mehr Mutterfernvermittlungsstellen verbunden ist, wobei jede Mutterfernvermittlungsstelle eine von mehreren Fernvermittlungsstellen ist, die über Fernmeldewege miteinander verbunden sind, und mit einer Kontrolleinrichtung, die auf das Netz Kontrollen ausübt, dadurch gekennzeichnet, daß es ein System enthält, das auf die Tatsache anspricht, daß während der Dauer einer Meßperiode der Durchschnittswert der Alle-Schaltungen-belegt-Parameter (ACE-Parameter) über sämtliche Verkehrswege zu der Teilnehmervermittlungsstelle größer als ein erster Schwellenwert ist und eine Abnahme des Durchschnittswerts der Schaltungen-in-Dienst-Parameter (CCTS IS-Parameter) über sämtliche Verkehrswege zu der Teilnehmervermittlungsstelle, die größer als ein zweiter Schwellenwert ist, aufgetreten ist, um ein Signal zu erzeugen, das angibt, daß in der Teilnehmervermittlungsstelle ein Fehler aufgetreten ist.

6. Kommunikationsnetz, mit wenigstens einer Teilnehmervermittlungsstelle, die über einen oder mehr Wege mit einer oder mehr Mutterfernvermittlungsstellen verbunden ist, wobei jede Mutterfernvermittlungsstelle eine von mehreren Fernvermittlungsstellen ist, die über Fernmeldewege miteinander verbunden sind, und einer Kontrolleinrichtung, die auf das Netz Kontrollen ausübt, dadurch gekennzeichnet, daß es ein System enthält, das bewirkt, daß mittels der Kontrolleinrichtung auf das Netz Kontrollen ausgeübt werden, wobei das System auf die Tatsache anspricht, daß während der Dauer einer Meßperiode der Durchschnittswert der Alle-Schaltungen-belegt-Parameter (ACE-Parameter) über sämtliche Verkehrswege zu der Teilnehmervermittlungsstelle größer als ein erster Schwellenwert ist und eine Abnahme des Durchschnittswerts der Schaltungen-in-Dienst-Parameter (CCTS IS-Parameter) über sämtliche Verkehrswege zu der Teilnehmervermittlungsstelle, die größer als ein zweiter Schwellenwert ist, aufgetreten ist.

## Revendications

1. Procédé de commande d'un réseau de communications, qui comprend au moins un central local relié par une ou plusieurs voies d'acheminement à un ou plusieurs centraux interurbains parents, chaque central interurbain parent étant l'un d'une pluralité de centraux interurbains interconnectés par des voies d'acheminement interurbaines, caractérisé en ce que le procédé comprend l'application de commandes au réseau pour prendre en compte un dérangement de central local lorsque la valeur moyenne des paramètres d'occupation de tous les circuits (ACE) sur toutes les voies d'acheminement du trafic jusque dans un central local est supérieure à un premier seuil et qu'il s'est produit une diminution de la valeur moyenne des paramètres des circuits en service (CCTS IS) sur toutes les voies d'acheminement du trafic jusque dans le central local, supérieure à un second seuil sur la durée d'une période de mesure.

2. Procédé selon la revendication 1, dans lequel le premier seuil est au moins de 10 %.

3. Procédé selon l'une quelconque des revendications précédentes, dans lequel le second seuil est au moins de 20 %.

4. Procédé selon l'une quelconque des revendications précédentes, dans lequel la période de mesure est approximativement de cinq minutes.

5. Réseau de communications comprenant au moins un central local qui est relié par une ou plusieurs voies d'acheminement à un ou plusieurs centraux interurbains parents, chaque central interurbain parent constituant l'un d'une pluralité de centraux interurbains interconnectés par des voies d'acheminement interurbaines, et un moyen de commande destiné à appliquer des commandes au réseau, caractérisé en ce qu'il comprend un système répondant à la valeur moyenne des paramètres d'occupation de tous les circuits (ACE) sur toutes les voies d'acheminement du trafic jusque dans le central local, lorsqu'elle est supérieure à un premier seuil, et à une diminution de la valeur moyenne des paramètres des circuits en service (CCTS IS) sur toutes les voies d'acheminement du trafic jusque dans le central local lorsqu'elle est supérieure à un second seuil, sur la durée d'une période de mesure, afin de procurer un signal indiquant que le central local est en dérangement.

6. Réseau de communications comprenant au moins un central local qui est relié par une ou plusieurs voies d'acheminement à un ou plusieurs centraux interurbains parents, chaque central interurbain parent étant l'un d'une pluralité de centraux interurbains interconnectés par des voies d'acheminement interurbaines, et un moyen de commande destiné à appliquer des commandes au réseau, caractérisé en ce qu'il comprend un système pour provoquer l'application de commandes au réseau grâce au moyen de commande, ledit système répondant à la valeur moyenne des paramètres d'occupation de tous les circuits (ACE) sur toutes les voies d'acheminement du trafic jusque dans le central local, lorsqu'elle est supérieure à un premier seuil, et à une diminution de la valeur moyenne des paramètres des circuits en service (CCTS IS) sur toutes les voies d'acheminement du trafic jusque dans le central local, lorsqu'elle est supérieure à un second seuil sur la durée d'une période de mesure.
